# EUROPÄISCHE PATENTSCHRIFT

(11) **EP 1 655 176 B1**
(45) Veröffentlichungstag und Bekanntmachung des Hinweises auf die Patenterteilung: **05.03.2008**
(21) Anmeldenummer: 05021091.3
(22) Anmeldetag: 28.09.2005
(51) Int. Cl.: B60R 11/02

(54) **Halteelement für einen DVD-Player**
Holding element for a DVD-player.
Elément de fixation pour lecteur DVD

(30) Priorität: 05.11.2004 DE 102004053451
(43) Veröffentlichungstag der Anmeldung: 10.05.2006
(73) Patentinhaber: Dr.Ing. h.c. F. Porsche Aktiengesellschaft, 70435 Stuttgart (DE)
(72) Erfinder: Stadler, Bernd, 71735 Eberdingen (DE)

(56) Entgegenhaltungen:
- EP-A- 0 408 930
- DE-U1- 20 204 540
- GB-A- 2 305 856
- US-A- 3 632 158
- US-A- 4 585 196

## Beschreibung

Die Erfindung bezieht sich auf eine Haltevorrichtung für ein Wiedergabegerät nach dem Oberbegriff des Anspruchs 1.

Die Befestigung eines Wiedergabegeräts, wie beispielsweise eines DVD-Players an einem Fahrzeugsitz eines Kraftfahrzeugs soll so erfolgen, dass bei einem Crash und bei einem Gebrauch ein sicherer Halt am Sitz gewährleistet ist.

Dokument US-A-3,632,158 beschreibt eine Haltevorrichtung für eine Konsole mit Kommunikationsgerät, die an einem Fahrzengsitz positionniert und einseitig mit Riemenbändern gehalten wird.

Aufgabe der Erfindung ist es, eine Haltevorrichtung für ein Wiedergabegerät an einem Fahrzeugsitz zu schaffen, die das Wiedergabegerät positioniert und unverrückbar am Sitz festhält und das Gerät mittels der Haltevorrichtung in einfacher Weise montierbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass mittels der Haltevorrichtung das Wiedergabegerät an der Sitzfläche eines Rücksitzes eines Kraftfahrzeugs zum einen unverrückbar auf der Sitzfläche gehalten wird und zum anderen am Boden des Fahrzeugaufbaus festsetzbar ist. Dies wird erreicht, indem mit einem Gehäuse des Wiedergabegeräts eine im Querschnitt U-profilförmige Konsole verbunden ist, die in einer Festsetzstellung - in Fahrtrichtung gesehen - eine hintere Sitzkante des Fahrzeugsitzes mit einem Ober- und Unterteil umgreift und mindestens einen Fixierzapfen sowie ein aus einem abgestellten Schenkel gebildetes Arretierelement umfasst, das festsetzbar zu einem korrespondierend und mit diesem ortsfesten Halteelement angeordnet ist.

Damit eine wirksame Sicherung des Wiedergabegeräts, insbesondere bei einem Crash, gegen eine Bewegung in Hochrichtung erzielt wird, besteht der abgestellte Schenkel des Arretierelements aus einer vom Unterteil der Konsole seitlich wegragenden Zunge, die zum Unterteil der Konsole abgesetzt ist und welche zur Einnahme der Festsetzstellung unterhalb des ortsfesten Halteelements liegt und in Hochrichtung über dieses Halteelement festgehalten wird.

Zur unverrückbaren Positionierung des Wiedergabegeräts an der Sitzfläche ist des Weiteren vorgesehen, dass mit dem Unterteil der Konsole der Fixierzapfen verbunden ist und dieser einer Sitzunterfläche zugerichtet ist und in einer Aufnahmebohrung eines Sitzrahmens oder eines Rahmenteils rastend eingreift. Durch diesen Fixierzapfen wird die Lage des Wiedergabegeräts gegen ein seitliches verrutschen oder Verschieben festgelegt.

Zur Einnahme der Festsetzstellung des Wiedergabegeräts wird in einfacher Weise die Konsole des Gehäuses des Wiedergabegeräts auf die hintere Fahrzeugsitzkante gesteckt und der Arretierzapfen wird rastend in die Aufnahmebohrung des Sitzrahmens eingeführt und der abgestellte Schenkel des Arretierelements wird durch eine Sitzverlagerung entgegen der Fahrtrichtung - unterhalb des Halteelements geschoben.

Weitere Merkmale der Erfindung sind in den Unteransprüchen gekennzeichnet.

Ein Ausführungsbeispiel der Erfindung ist in den Zeichnungen dargestellt und wird im Folgenden näher beschrieben.

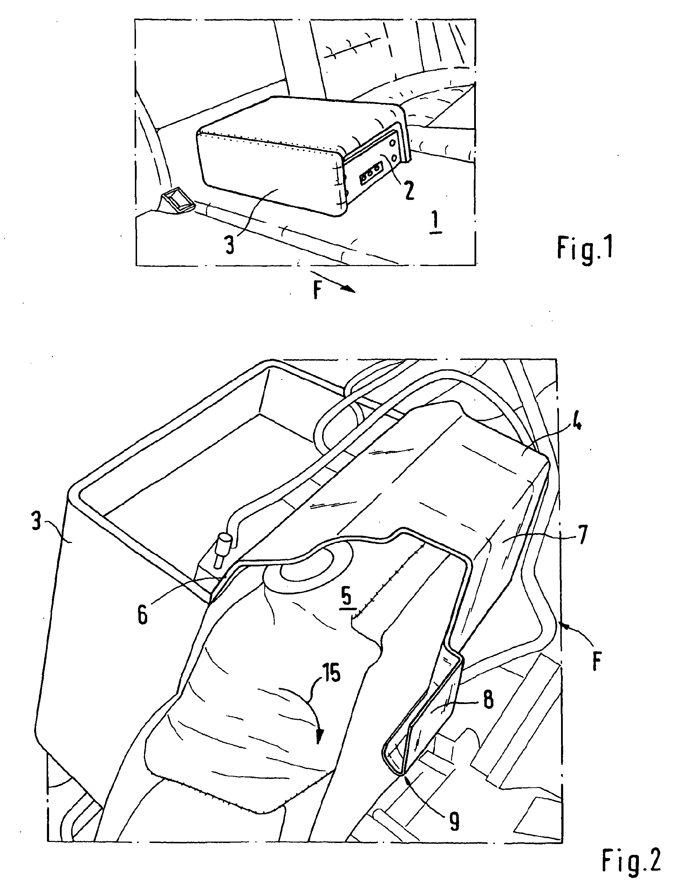

Es zeigen
- Fig. 1: eine Ansicht auf ein auf einer Sitzfläche angeordnetes Wiedergabegerät, wie beispielsweise einen DVD-Player,
- Fig. 2: eine schaubildliche Darstellung auf eine Konsole der Haltevorrichtung für das Wiedergabegerät von hinten her gesehen,
- Fig. 3: eine Ansicht auf ein ortsfestes Halteelement am Fahrzeugboden,
- Fig. 4: eine Ansicht auf das Halteelement mit untergeschobener Zunge des abgestellten Schenkels der Konsole und
- Fig. 5: eine schematische Darstellung der Konsole mit Fixierzapfen und in strichpunktierten Linien angedeuteten Sitzträger mit Aufnahmebohrung.

Auf einer Sitzfläche 1 eines Fondsitzes ist ein Wiedergabegerät 2 angeordnet, welches in einem Gehäuse 3 gehalten und mit einer U-profilförmigen Konsole 4 verbunden ist. Die Konsole 4 umgreift eine - in Fahrtrichtung F gesehen - hintere Sitzkante 5 des Fahrzeugsitzes von oben und von unten her.

Diese Konsole 4 weist ein Oberteil 6 sowie ein Unterteil 7 auf, das einen abgestellten Schenkel 8 als Arretierelement 9 aufweist. Dieser Schenkel 8 umfasst eine seitlich wegragende Zunge, die zum Unterteil 7 der Konsole 4 tiefergelegen bzw. abgesetzt ist und einen hochgestellten Anschlagschenkel 10 als Endanschlag aufweist.

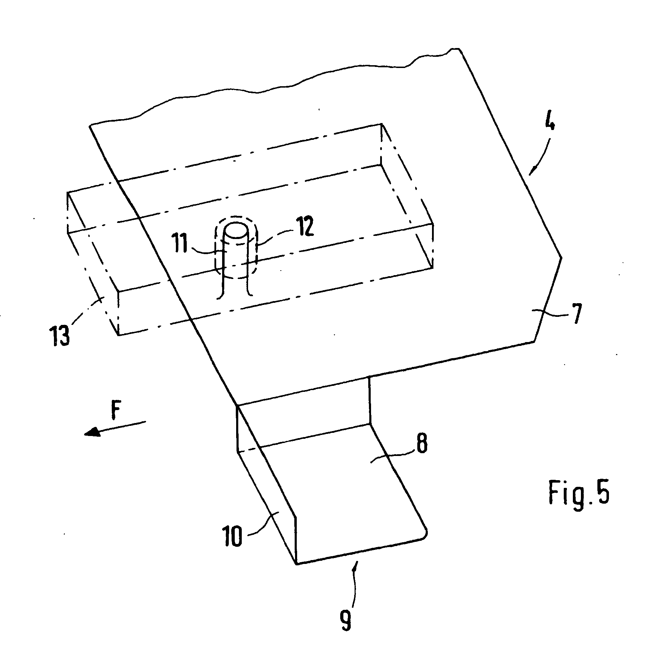

Mit dem Unterteil 7 der Konsole 4 ist ein Fixierzapfen 11 verbunden, welcher der Sitzunterfläche hochragend zugerichtet ist und der in eine Aufnahmebohrung 12 eines Rahmenteils 13 des Sitzes eingreift, was schematisch in Fig. 5 gezeigt ist:

Am Fahrzeugboden 16 ist ein ortsfestes Halteelement 14 zur Aufnahme der aus dem abgestellten Schenkel 8 gebildeten Zunge des Arretierelements 9 angeordnet.

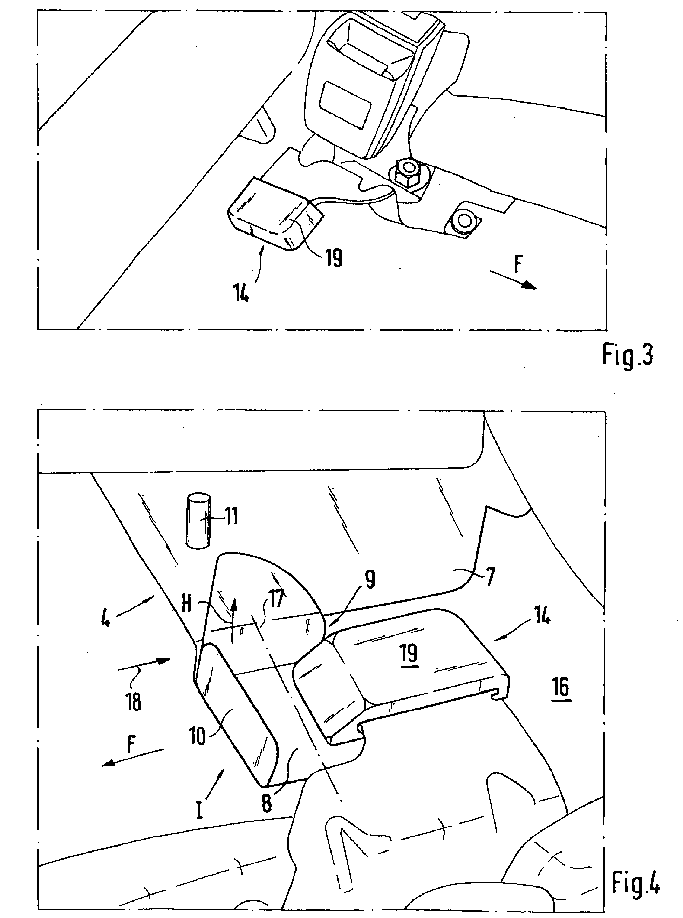

Die Montage des Wiedergabegeräts 8 am Sitz erfolgt in der Weise, dass die Konsole 4 über die hintere Sitzkante 5 geschoben wird und der Fixierzapfen 11 in die Aufnahmebohrung 12 des Sitzrahmens 13 oder dgl. eingeführt wird. Danach wird der Sitz in Pfeilrichtung 15 zum Fahrzeugboden 16 geklappt, wobei die Zunge des abgestellten Schenkels 8 eine Lage vor dem ortsfesten Halteelement 14, wie von der strichpunktierten Linie 17 in Fig. 4 angedeutet, einnimmt. Durch ein Verschieben des Sitzes entgegen der Fahrtrichtung F in Pfeilrichtung 18, wird die Zunge des abgestellten Schenkels 8 dann unterhalb des Halteelements 14 geschoben und hierdurch in Hochrichtung H festgehalten. Das Halteelement 14 kann ein Gleitelement 19 aufweisen, welches auch gegen ein Klappern wirkt, wenn der abgestellte Schenkel 8 sich im Fahrbetrieb gegen das Halteelement 14 bewegen sollte.

## Patentansprüche

1. Haltevorrichtung für ein Wiedergabegerät, insbesondere für einen DVD-Player an einem Fahrzeugsitz, **dadurch gekennzeichnet, dass** mit einem Gehäuse (3) des Wiedergabegeräts (2) eine im Querschnitt U-profilförmige Konsole (4) verbunden ist, die in einer Festsetzstellung (I) - in Fahrtrichtung (F) gesehen - eine hintere Sitzkante (5) des Fahrzeugsitzes mit einem Ober- und Unterteil (6, 7) umgreift und mindestens einen Fixierzapfen (11) sowie ein aus einem abgestellten Schenkel (8) gebildetes Arretierelement (9) umfasst, das festsetzbar zu einem korrespondierenden und mit diesem ortsfesten Halteelement (14) des Fahrzeugaufbaus angeordnet ist.

2. Haltevorrichtung nach Anspruch 1, **dadurch gekennzeichnet, dass** der abgestellte Schenkel (8) des Arretierelements (9) aus einer vom Unterteil (7) der Konsole (4) seitlich wegragenden Zunge besteht, die zum Unterteil (7) der U-förmigen Konsole (4) abgesetzt ist und welche zur Einnahme der Festsetzstellung (I) unterhalb des ortsfesten Halteelements (14) liegt und in Hochrichtung (H) über dieses Halteelement (14) festgehalten ist.

3. Haltevorrichtung nach den Ansprüchen 1 oder 2, **dadurch gekennzeichnet, dass** die wegragende Zunge des abgestellten Schenkels (8) eine - in Fahrtrichtung F gesehen - vordere Begrenzung aufweist, die aus einem hochgestellten Anschlagschenkel (10) besteht, der am Halteelement (14) in der Festsetzstellung (I) anlegbar ist.

4. Haltevorrichtung nach den Ansprüchen 1, 2 oder 3, **dadurch gekennzeichnet, dass** mit dem Unterteil (7) der Konsole (4) der Fixierzapfen (11) verbunden ist und einer Sitzunterfläche zugerichtet ist und in eine Aufnahmebohrung (12) eines Sitzrahmens (13) rastend eingreift.

5. Haltevorrichtung nach einem der vorhergehenden Ansprüche, **dadurch gekennzeichnet, dass** die Konsole (4) des Gehäuses (3) des Wiedergabegeräts (2) zur Einnahme der Festsetzstellung (I) auf die hintere Fahrzeugsitzkante (5) steckbar ist und der Arretierzapfen (11) rastend in der Aufnahmebohrung (12) gehalten ist und der abgestellte Schenkel (8) des Arretierelements (9) durch eine Sitzverschiebung - entgegen der Fahrtrichtung F - unterhalb des Halteelements (14) verschiebbar ist.

6. Haltevorrichtung nach einem der vorhergehenden Ansprüche, **dadurch gekennzeichnet, dass** auf dem ortsfesten Halteelement (14) ein Gleitelement (19) angeordnet ist.

## Claims

1. Holding device for a playback unit, in particular for a DVD player, on a vehicle seat, **characterized in that** a bracket (4) which is in the shape of a U profile in cross section is connected to a housing (3) of the playback unit (2), in a fixed position (I) - as seen in the direction of travel (F) - engages by means of an upper and lower part (6, 7) around a rear seat edge (5) of the vehicle seat and comprises at least one fixing pin (11) and a locking element (9) which is formed from an angled limb (8) and is arranged in a manner such that it can be fixed with respect to a corresponding holding element (14) of the vehicle body, which holding element is fixed in position by said locking element.

2. Holding device according to Claim 1, **characterized in that** the angled limb (8) of the locking element (9) comprises a tongue which projects away laterally from the lower part (7) of the bracket (4), is offset with respect to the lower part (7) of the U-shaped bracket (4) and is located under the positionally fixed holding element (14) so as to take up the fixed position (I) and is secured in the vertical direction (H) via said holding element (14).

3. Holding device according to Claims 1 and 2, **characterized in that** the projecting-away tongue of the angled limb (8) has - as seen in the direction of travel F - a front delimitation which comprises a raised stop limb (10) which can be placed against the holding element (14) in the fixed position (I).

4. Holding device according to Claims 1, 2 or 3, **characterized in that** the fixing pin (11) is connected to the lower part (7) of the bracket (4) and faces a seat lower surface and engages in a latching manner in a receiving hole (12) in a seat frame (13).

5. Holding device according to one of the preceding claims, **characterized in that**, in order to take up the fixed position (I), the bracket (4) of the housing (3) of the playback unit (2) can be placed onto the rear vehicle seat edge (5) and the locking pin (11) is held in a latching manner in the receiving hole (12) and the angled limb (8) of the locking element (9) can be displaced under the holding element (14) by means of a displacement of the seat counter to the direction of travel F.

6. Holding device according to one of the preceding claims, **characterized in that** a sliding element (19) is arranged on the positionally fixed holding element (14).

## Revendications

1. Dispositif de retenue pour un appareil de lecture, notamment pour un lecteur de DVD sur un siège de véhicule, **caractérisé en ce que** l'on connecte à un boîtier (3) de l'appareil de lecture (2) une console (4) de section transversale en forme de profilé en U, qui vient en prise par une partie supérieure et une partie inférieure (6, 7) dans une position de fixation (I) - vue dans la direction de conduite (F) - autour d'un bord de siège arrière (5) du siège du véhicule et qui comprend au moins un tourillon de fixation (11) ainsi qu'un élément de blocage (9) formé d'une branche en déport (8), qui est disposé de manière immobilisable par rapport à un élément de retenue (14) correspondant de la carrosserie du véhicule et fixe par rapport à celui-ci.

2. Dispositif de retenue selon la revendication 1, **caractérisé en ce que** la branche en déport (8) de l'élément de blocage (9) se compose d'une langue saillant latéralement depuis la partie inférieure (7) de la console (4), qui est abaissée par rapport à la partie inférieure (7) de la console en forme de U (4), et qui est située, pour adopter la position de fixation (I), en dessous de l'élément de retenue fixe (14) et qui est maintenue fixement par-dessus cet élément de retenue (14) dans la direction redressée (H).

3. Dispositif de retenue selon l'une quelconque des revendications 1 ou 2, **caractérisé en ce que** la langue saillante de la branche en déport (8) présente une limitation avant - vue dans la direction de conduite F - qui se compose d'une branche de butée (10) redressée, qui peut être appliquée contre l'élément de retenue (14) dans la position de fixation (I).

4. Dispositif de retenue selon l'une quelconque des revendications 1, 2 ou 3, **caractérisé en ce que** le tourillon de fixation (11) est connecté à la partie inférieure (7) de la console (4) et est orienté vers une face inférieure du siège et vient en prise par encliquetage dans un alésage de réception (12) d'un cadre de siège (13).

5. Dispositif de retenue selon l'une quelconque des revendications précédentes, **caractérisé en ce que** la console (4) du boîtier (3) de l'appareil de lecture (2) peut être enfichée sur le bord arrière (5) du siège du véhicule pour adopter la position de fixation (I) et le tourillon de blocage (11) est maintenu par encliquetage dans l'alésage de réception (12) et la branche en déport (8) de l'élément de blocage (9) est déplaçable en dessous de l'élément de retenue (14) par un déplacement du siège à l'encontre de la direction de conduite F.

6. Dispositif de retenue selon l'une quelconque des revendications précédentes, **caractérisé en ce qu'**un élément de glissement (19) est disposé sur l'élément de retenue (14) fixe.
